**Europäisches Patentamt**

**European Patent Office**

**Office européen des brevets**

(11) Veröffentlichungsnummer: **0 286 632 B1**

(19)

(12) **EUROPÄISCHE PATENTSCHRIFT**

(45) Veröffentlichungstag der Patentschrift:
27.02.91 Patentblatt 91/09

(51) Int. Cl.⁵: **B60K 23/02**

(21) Anmeldenummer: **88890089.1**

(22) Anmeldetag: **08.04.88**

(54) **Antrieb für landwirtschaftliche Nutzfahrzeuge.**

(30) Priorität: **10.04.87 AT 898/87**

(43) Veröffentlichungstag der Anmeldung:
**12.10.88 Patentblatt 88/41**

(45) Bekanntmachung des Hinweises auf die
Patenterteilung:
**27.02.91 Patentblatt 91/09**

(84) Benannte Vertragsstaaten:
**BE CH DE FR GB IT LI LU**

(56) Entgegenhaltungen:
**GB-A- 1 213 948
US-A- 3 550 712
US-A- 3 592 318**

(56) Entgegenhaltungen:
**US-A- 4 428 249
PATENT ABSTRACTS OF JAPAN, Band 7, Nr.
141 (M-223)[1286], 21. Juni 1983; & JP-A-58 53
517 (KUBOTA TEKKO K.K.) 30-03-1983**

(73) Patentinhaber: **STEYR-DAIMLER-PUCH
AKTIENGESELLSCHAFT
Franz-Josefs-Kai 51
A-1010 Wien (AT)**

(72) Erfinder: **Knell, Karl Dipl.-Ing.
A-4400 Steyr im Pyrach 28 (AT)**

(74) Vertreter: **Kovac, Werner
c/o Steyr-Daimler-Puch AG Patent- und
Lizenzwesen Franz-Josefs-Kai 51
A-1010 Wien (AT)**

## Beschreibung

Die Erfindung bezieht sich auf einen Antrieb für landwirtschaftliche Nutzfahrzeuge mit einem vom Motor über eine Fahrkupplung und ein Schaltgetriebe führenden Antriebsstrang zu den Fahrzeugtriebrädern und einer unabhängig von diesem Antriebsstrang vom Motor angetriebenen Zapfwelle.

Derartige Nutzfahrzeuge, vor allem Ackerschlepper, haben verschiedene Aufgabe zu erfüllen. Sie dienen einerseits bloß zum Ziehen von verschiedenen Anhängern oder zum Pflügen mit einem Anbau- oder Abhängepflug, anderseits sind sie zufolge der Zapfwelle dafür geeignet, angehängte Arbeitsgeräte nicht nur zu ziehen, sondern auch deren Werkzeuge anzutreiben. Zum reinen Zugbetrieb würde ein Motor mit vergleichsweise geringer Leistung ausreichen. Wenn aber mit einem Arbeitsgerät gefahren und dieses über die Zapfwelle angetrieben werden soll, ist, insbesondere bei Arbeitsgeräten, deren Arbeitsbreite die Spurweite des Nutzfahrzeuges wesentlich übersteigt, eine erhöhte Antriebsleistung erforderlich. Gleiches gilt, wenn außer dem Arbeitsgerät noch ein Anhänger vorgesehen ist, wenn also beispielsweise ein Feldhäcksler zusammen mit einem Häckselwagen gekuppelt und letzterer zunehmend befüllt wird. Für das vom Motor gelieferte verhältnismäßig geringe Drehmoment für den reinen Zugbetrieb würde ein entsprechend schwach dimensioniertes Schaltgetriebe ausreichen, zumal das höhere Drehmoment für Arbeitsgeräte mit drehenden Werkzeugen über die vom Schaltgetriebe unabhängige Zapfwelle übertragen wird. Bisher ist aber das Schaltgetriebe stets entsprechend dem Motordrehmoment ausgelegt, was nicht nur zu einem erhöhten Gewicht des ganzen Fahrzeuges, sondern selbstverständlich auch zu vermehrten Herstellungs- bzw. Anschaffungskosten führt.

Somit liegt der Erfindung die Aufgabe zugrunde, diesen Mangel zu beseitigen und einen Antrieb zu schaffen, bei dem sich trotz vergleichsweise hoher Motorleistung eine Verringerung des Fahrzeuggewichtes und der Erstehungskosten erreichen lassen.

Die Erfindung löst die gestellte Aufgabe dadurch, daß das Schaltgetriebe für ein dem Motorhöchstdrehmoment gegenüber verringertes Eingangsdrehmoment ausgelegt ist und ein bei dessen Erreichen ansprechendes Stellglied vorgeordnet hat, das zunächst ein Warnsignal auslöst, wonach bei Überschreitung dieses Eingangsdrehmomentes die Fahrkupplung und/oder eine Schaltkupplung des Schaltgetriebes bzw. eine Trennkupplung im Antriebsstrang sowie die Betriebsbremse des Fahrzeuges mittels des Stellgliedes selbständig betätigbar sind.

Das Fahrzeug kann mit einem Motor ausgestattet werden, der das geforderte Höchstdrehmoment für besonders breite Arbeitsgeräte oder für Kombinationsfahrt mit Anhänger und Arbeitsgerät liefert. Dennoch wird erfindungsgemäß aber das Schaltgetriebe nur für ein wesentlich geringeres Drehmoment bemessen, weil für den Regelfall im reinen Zugbetrieb mit einem wesentlich geringeren Motordrehmoment das Auslangen gefunden wird. Sollte aber aus irgendeinem Grund über das nunmehr schwächer dimensionierte Schaltgetriebe ein höheres Drehmoment geleitet werden, so spricht bei Erreichen des vorbestimmten Eingangsdrehmomentes das Stellglied an und löst das Warnsignal aus, so daß der Fahrer entsprechende Maßnahmen ergreifen kann, um das schwächer dimensionierte Schaltgetriebe vor Beschädigungen durch ein erhöhtes zu übertragendes Drehmoment zu bewahren. Er kann beispielsweise die Fahrkupplung treten und so den Fahrantrieb unterbrechen oder er kann einen niedrigeren Gang im Schaltgetriebe einlegen, um so eine Drehmomentverringerung herbeizuführen. Der Motor und die Zapfwelle laufen aber weiter, um bei Betrieb eines Erntegerätes od.dgl. Verstopfungen in diesem Gerät zu vermeiden. Sollte der Fahrer auf das Warnsignal nicht reagieren, also nicht die angeführten Maßnahmen von sich aus ergreifen, so daß das vorbestimmte Eingangsdrehmoment überschritten wird, so wird zumindest eine der Kupplungen selbständig betätigt und dadurch auf jeden Fall eine Überlastung des schwächer dimensionierten Schaltgetriebes verhindert. Die gleichzeitige oder unmittelbar nachfolgende Betätigung der Betriebsbremse des Fahrzeuges ist dabei notwendig, um zu vermeiden, daß das Fahrzeug auf einem Hang ungewollt ins Rollen kommt, wenn mit Hilfe des Stellgliedes die Fahrkupplung oder eine andere Trennkupplung betätigt wird und der Motor daher als Bremse ausfällt. Handelt es sich um ein unter Last schaltbares Schaltgetriebe, so ist es möglich, nicht nur einen Gang zu schalten, sondern je nach Bedarf mehrere Gänge abwärts zu schalten, um die gewünschte Verringerung des zu übertragenden Drehmomentes zu erzielen. Die Übertragung vom Stellglied auf die Kupplungen bzw. auf die Betriebsbremse kann auf elektrischem, aber auch auf mechanischem, hydraulischem oder pneumatischem Wege erfolgen.

Es ist zwar bereits bekannt (DE-A- 29 02 557, GB-A - 1 599 941, DD-A - 16 598 und DE-B - 29 10 395), im Antrieb der Zapfwelle bzw. des von ihr angetriebenen Arbeitsgerätes eine Überlastkupplung vorzusehen. Dabei geht es aber lediglich darum, das angeschlossene Arbeitsgerät vor Beschädigung durch Überlastung von einem zu hohen Drehmoment zu schützen, was aber mit einer Maßnahme zur Verringerung der Abmessungen des Schaltgetriebes nichts zu tun hat.

Eine besonders einfache und zweckmäßige Konstruktion des Stellgliedes wird dadurch erreicht, daß dieses nach Art einer Kupplung aus zwei auf je einer Welle drehfest sitzenden Kupplungsteilen besteht, die mit schraubenflächigen Klauen oder mit Radialbolzen des einen Kupplungsteiles in schraubenförmige Kulissen des anderen Kupplungsteiles ineinandergreifen, wobei der eine Kupplungsteil axial verschiebbar gelagert und durch vorzugsweise zwei Federn gestaffelt belastet ist, so daß von der sich bei Drehmomentsteigerung ergebenden Axialbewegung des letzteren Kupplungsteiles Schaltvorgänge od.dgl. ableitbar sind.

In der Zeichnung ist der Erfindungsgegenstand beispielsweise dargestellt, und zwar zeigen

Fig. 1 das Schema eines Antriebes für landwirtschaftliche Nutzfahrzeuge und die

Fig. 2 und 3 zwei Ausführungsvarianten des Stellgliedes jeweils in axialem Teilschnitt.

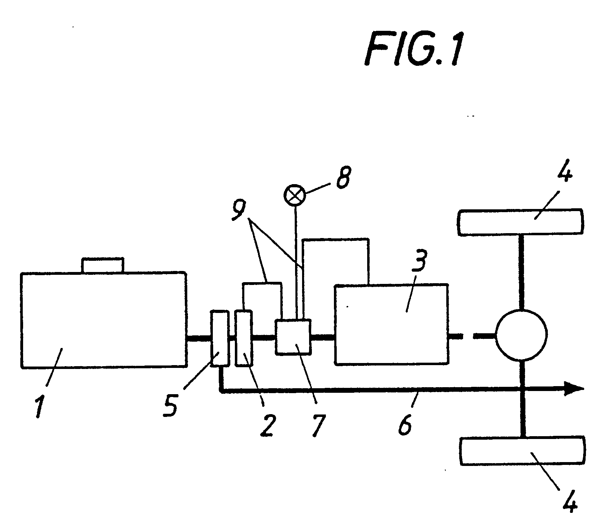

Der Antrieb weist einen vom Motor 1 über eine Fahrkupplung 2 und ein Schaltgetriebe 3 zu den Fahrzeugtriebrädern 4 führenden Antriebsstrang auf. Unabhängig von diesem Antriebsstrang ist eine vom Motor 1 über eine Trennkupplung 5 angetriebene Zapfwelle 6 vorgesehen. Dem Schaltgetriebe 3, das für ein dem Motorhöchstdrehmoment gegenüber verringertes Eingangsdrehmoment ausgelegt ist, ist erfindungsgemäß ein Stellglied 7 vorgeordnet, das bei Erreichen dieses Eingangsdrehmomentes ein Warnsignal auslöst, so daß beispielsweise eine Signallampe 8 aufleuchtet. Wird das bestimmte Eingangsdrehmoment überschritten, so wird mittels des Stellgliedes 7 über die Leitungen 9 die Fahrkupplung 2 und/oder eine Schaltkupplung des Schaltgetriebes 3 betätigt und zugleich die Betriebsbremse des Fahrzeuges angezogen, was in Fig. 1 der Übersichtlichkeit halber nicht dargestellt ist.

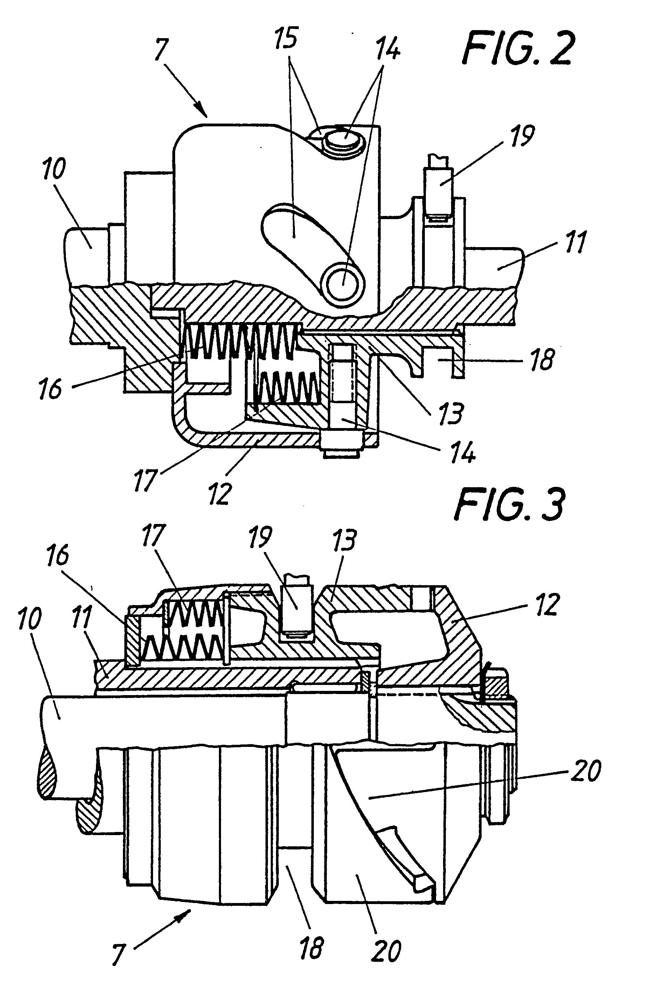

Gemäß Fig. 2 besteht das Stellglied 7 aus zwei auf je einer Welle 10, 11 drehfest sitzenden Kupplungsteilen 12, 13, wobei der Kupplungsteil 13 mit Radialbolzen 14 in schraubenförmige Kulissen 15 des Kupplungsteiles 12 eingreift, auf der Welle 11 axial verschiebbar gelagert und durch zwei Tellerfederpakete 16, 17 belastet ist. Bei Steigerung des zu übertragenden Drehmomentes über ein vorbestimmtes Maß ergibt sich zufolge der Relativverdrehung der Kupplungsteile 12, 13 und der Kulissenführung der Radialbolzen 14 gegen die Kraft der Federtellerpakete 16, 17 eine Axialverschiebung des Kupplungsteiles 13, wobei zunächst nur das Tellerfederpaket 16 zusammengedrückt wird und dann erst das Tellerfederpaket 17 zur Wirkung kommt, so daß sich eine Art zweistufige Verschiebung des Kupplungsteiles 13 ergibt. Der Kupplungsteil 13 ist mit einer Ringnut 18 versehen, in die ein Schaltfinger 19 eingreift, der bei der Verschiebung des Kupplungsteiles 13 mitbewegt wird und zur Auslösung eines oder mehrerer Schaltvorgänge herangezogen werden kann.

Bei der Ausführungsvariante nach der Fig. 3 ist mit der Welle 10 der Kupplungsteil 12 drehfest und axial unverschiebbar verbunden, wogegen auf der Welle 11 der zweite Kupplungsteil 13 drehfest, aber axial verschiebbar gelagert ist. Der Kupplungsteil 12 ist wieder durch zwei Tellerfederpakete 16, 17 belastet und weist eine Ringnut 18 für einen Schaltfinger 19 auf. An Stelle der Radialbolzen 14 und der Kulissen 15 greifen die beiden Kupplungsteile 12, 13 mit schraubenflächigen Klauen 20 ineinander, so daß sich bei Steigerung des zu übertragenden Drehmomentes wieder eine Axialverschiebung des Kupplungsteiles 13 gegen die Kraft der Tellerfederpakete 16, 17 und damit eine Verstellung des Schaltfingers 19 ergibt.

## Ansprüche

1. Antrieb für landwirtschaftliche Nutzfahrzeuge mit einem vom Motor (1) über eine Fahrkupplung (2) und ein Schaltgetriebe (3) führenden Antriebsstrang zu den Fahrzeugtriebrädern (4) und einer unabhängig von diesem Antriebsstrang vom Motor (1) angetriebenen Zapfwelle (6) dadurch gekennzeichnet, daß das Schaltgetriebe (3) für ein dem Motorhöchstdrehmoment gegenüber verringertes Eingangsdrehmoment ausgelegt ist und ein bei dessen Erreichen ansprechendes Stellglied (7) vorgeordnet hat, das zunächst ein Warnsignal (8) auslöst, wonach bei Überschreitung dieses Eingangsdrehmomentes die Fahrkupplung (2) und/oder eine Schaltkupplung des Schaltgetriebes (3) bzw. eine Trennkupplung (5) im Antriebsstrang (2, 3, 4) sowie die Betriebsbremse des Fahrzeuges mittels des Stellgliedes selbständig betätigbar sind.

2. Antrieb nach Anspruch 1, dadurch gekennzeichnet, daß das Stellglied (7) nach Art einer Kupplung aus zwei auf je einer Welle (10, 11) drehfest sitzenden Kupplungsteilen (12, 13) besteht, die mit schraubenflächigen Klauen (20) oder mit Radialbolzen (14) des einen Kupplungsteiles (13) in schraubenförmige Kulissen (15) des anderen Kupplungsteiles (12) ineinandergreifen, wobei der eine Kupplungsteil (13) axial verschiebbar gelagert und durch vorzugsweise zwei Federn (16, 17) gestaffelt belastet ist, so daß von der sich bei Drehmomentsteigerung ergebenden Axialbewegung des letzteren Kupplungsteiles (13) Schaltvorgänge od.dgl. ableitbar sind.

## Claims

1. A drive tar agricultural utility vehicles comprising a power train, which leads from the motor (1) via a traction clutch (2) and a change-speed transmission (3) to the driven wheels (4) of the vehicle, and a power take-off shaft (6) which is driven by said motor (1) independently at said power train, characterized in that the change-speed transmission (3) is designed for an input torque which is lower than the highest torque at the motor and the change-speed transmission is preceded by a control element (7), which is responsive to the reaching of said input torque and initially initiates the generation of a warning signal (88) and in response to a rise above said input torque the traction clutch (2) and/or a shifting clutch of the change-speed transmission (3) and/or a disconnecting clutch (5) in the power train (2, 3, 4) and the service brake of the vehicle can automatically be actuated by means of the control element.

2. A drive according to claim 1, characterized in that the control element (7) is similar to a clutch and consists of two coupling members (12, 13), which are non-rotatably mounted an respective shafts (10, 11) and provided with interengaging helical claws (20), or one coupling member (13) is provided with radial pins (14) extending into helical cam slots (15) of the other coupling member (12), wherein one coupling member (13) is axially displaceably mounted and is biased in a stepped manner by preferably two springs (16, 17) so that switching operations or the like can be derived from the axial movement performed by the latter coupling member (13) in response to a torque increase.

**Revendications**

1. Transmission de couple pour véhicules agricoles avec une branche de transmission menant aux roues motrices (4) à partir d'un moteur (1) par l'intermédiaire d'un embrayage de roulement (2) et d'une boîte de vitesses (3), et avec une prise de force (6) entraînée à partir du moteur (1) indépendamment de cette branche de transmission, caractérisé en ce que la boîte de vitesses (3) est dimensionnée pour un couple d'entrée réduit en comparaison du couple maximal du moteur et comprend, en amont, un organe de contrôle (6) correspondant qui, lorsque ce couple d'entrée est atteint, déclenche d'abord un signal d'alarme (8), après quoi, lors du dépassement de ce couple d'entrée, l'embrayage de roulement (2) et/ou un accouplement d'un rapport de la boîte de vitesses (3) ou un embrayage de séparation (5) de la branche de transmission (2, 3, 4), ainsi que le frein de service du véhicule, sont actionnés automatiquement au moyen de l'organe de contrôle.

2. Transmission de couple selon la revendication 1, caractérisé en ce que l'organe de contrôle (7) se compose, à la manière d'un embrayage, de deux parties d'embrayage (12, 13) qui sont calées en rotation chacune sur un arbre respectif (10, 11) et s'engagent l'une avec l'autre par des griffes (20) à surfaces hélicoïdales ou par des boulons radiaux (14) de l'une des pièces d'embrayage (13) introduits dans des coulisses hélicoïdales (15) de l'autre pièce d'embrayage (12), la première pièce d'embrayage (13) étant montée mobile en sens axial et étant rappelée de manière étagée avantageusement à l'aide de deux ressorts (16, 17), de sorte que des opérations d'accouplement ou des opérations similaires sont exécutables à partir du déplacement axial de la dernière pièce d'embrayage (13) se produisant lors de l'accroissement du couple.

# FIG.1

FIG. 2

FIG. 3